# EUROPÄISCHE PATENTSCHRIFT

(11) **EP 3 304 124 B1**
(45) Veröffentlichungstag und Bekanntmachung des Hinweises auf die Patenterteilung: **31.08.2022**
(21) Anmeldenummer: 16727460.4
(22) Anmeldetag: 02.06.2016
(51) Int. Cl.: G01S 13/93, G08G 1/16

(54) **VERFAHREN ZUM KLASSIFIZIEREN EINES LÄNGLICH AUSGEDEHNTEN STATIONÄREN OBJEKTES IN EINEM SEITLICHEN UMGEBUNGSBEREICH EINES KRAFTFAHRZEUGS, FAHRERASSISTENZSYSTEM SOWIE KRAFTFAHRZEUG**
METHOD FOR CLASSIFYING AN ELONGATED STATIONARY OBJECT IN A LATERAL SURROUNDING REGION OF A MOTOR VEHICLE, DRIVER ASSISTANCE SYSTEM, AND MOTOR VEHICLE
PROCÉDÉ DE CLASSIFICATION D'UN OBJET FIXE ALLONGÉ DE MANIÈRE OBLONGUE DANS UNE ZONE D'ENVIRONNEMENT LATÉRALE D'UN VÉHICULE AUTOMOBILE, SYSTÈME D'AIDE À LA CONDUITE ET VÉHICULE AUTOMOBILE

(30) Priorität: 03.06.2015 DE 102015108759
(43) Veröffentlichungstag der Anmeldung: 11.04.2018
(73) Patentinhaber: Valeo Schalter und Sensoren GmbH, 74321 Bietigheim-Bissingen (DE)
(72) Erfinder: STURM, Christian, 74321 Bietigheim-Bissingen (DE); LUEBBERT, Urs, 74321 Bietigheim-Bissingen (DE); GOERNER, Stefan, 74321 Bietigheim-Bissingen (DE)
(74) Vertreter: Withopf, Kristina
(86) Internationale Anmeldenummer: PCT/EP2016/062438
(87) Internationale Veröffentlichungsnummer: WO 2016/193333

(56) Entgegenhaltungen:
- DE-A1-102004 016 024
- DE-A1-102004 019 651
- DE-A1-102006 018 585
- DE-A1-102009 040 003

## Beschreibung

Die Erfindung betrifft ein Verfahren zum Klassifizieren eines Objektes in einem seitlichen Umgebungsbereich eines Kraftfahrzeugs, bei welchem von einer fahrzeugseitigen Sensoreinrichtung zum Überwachen des seitlichen Umgebungsbereiches ein Signal in den seitlichen Umgebungsbereich ausgesendet und das an dem Objekt reflektierte Signal empfangen wird. Die Erfindung betrifft außerdem ein Fahrerassistenzsystem sowie ein Kraftfahrzeug.

Es ist bereits aus dem Stand der Technik bekannt, Objekte in einem Umgebungsbereich eines Kraftfahrzeugs mittels einer Sensoreinrichtung zu erfassen und Informationen über das Objekt einem Fahrerassistenzsystem, beispielsweise einem Totwinkelassistenten oder einem Spurwechselassistenten, bereitzustellen. Dabei kann als eine der Informationen beispielsweise ein Abstand des Objektes zu dem Kraftfahrzeug an das Fahrerassistenzsystem übertragen werden. So kann einem Fahrer des Kraftfahrzeugs beispielsweise ein Warnsignal ausgegeben werden, wenn durch die Sensoreinrichtung erfasst wurde, dass sich das Objekt in einem toten Winkel des Kraftfahrzeugs befindet und daher beispielsweise ein Spurwechsel aktuell nicht möglich ist. Andererseits soll aber verhindert werden, dass eine Warnung bei Fahrzeugen erfolgt, welche sich auf einer durch eine Leitplanke abgetrennten Nachbarfahrspur bewegen.

Dazu ist es für das Fahrerassistenzsystem wichtig, zu wissen, um welche Art von Objekt es sich bei dem erfassten Objekt handelt. Das erfasste Objekt muss also klassifiziert werden, um beispielsweise zu verhindern, dass der Fahrer unnötigerweise gewarnt wird. So sollen beispielsweise Fahrbahnbegrenzungen, welche sich in Form von Leitplanken entlang einer Fahrbahn des Kraftfahrzeugs erstrecken, von überholenden Kraftfahrzeugen unterschieden werden können. So kann beispielsweise verhindert werden, dass der Fahrer beim Entlangfahren an einer Leitplanke kontinuierlich und unnötigerweise vor dieser gewarnt wird.

In der DE 10 2005 039 859 A1 wird beispielsweise eine Spurhaltefunktion beschrieben, bei welcher eine Mittelleitplanke von mehreren Sensorsystemen abgetastet wird. Auch in der DE 10 2004 016 025 A1 wird ein Objektstandort eines 3D-Objektes an einer Seite eines Transportfahrzeugs klassifiziert.

DE 10 2004 019 651 A1 betrifft ein Blindspot-Sensorsystem zur Detektion und/oder Klassifikation von Objekten in einem definierten Überwachungsbereich eines Kraftfahrzeugs mittels Radar-Technik, umfassend wenigstens ein erstes Mittel zum Aussenden eines ersten Radarstrahls sowie ein zweites Mittel zum Aussenden eines zweiten Radarstrahls. Der radiale Sichtbereich des ersten Radarstrahls ist gegen die Fahrtrichtung des Kraftfahrzeugs derart geneigt und der radiale Sichtbereich des zweiten Radarstrahls im Wesentlichen senkrecht zur Fahrtrichtung derart orientiert, dass die Sichtbereiche der Radarstrahlen sich wenigstens teilweise überlappen und zusammen im Wesentlichen die Abmaße des Überwachungsbereiches abdecken, wobei zumindest der erste Radarstrahl sowohl im CW- als auch im FMCW-Modulationsmodus betreibbar ist. Es ist Aufgabe der vorliegenden Erfindung, Objekte in einem seitlichen Umgebungsbereich eines Kraftfahrzeugs einfach und mit einer hohen Genauigkeit klassifizieren zu können.

Diese Aufgabe wird erfindungsgemäß durch ein Verfahren, ein Fahrerassistenzsystem sowie ein Kraftfahrzeug mit den Merkmalen gemäß den unabhängigen Patentansprüchen gelöst.

Ein erfindungsgemäßes Verfahren dient zum Klassifizieren eines Objektes in einem seitlichen Umgebungsbereich eines Kraftfahrzeugs. Bei dem Verfahren wird von einer fahrzeugseitigen Sensoreinrichtung zum Überwachen des seitlichen Umgebungsbereiches ein Signal in den seitlichen Umgebungsbereich ausgesendet und das an dem Objekt reflektierte Signal empfangen. Darüber hinaus wird ein Überwachungsbereich der Sensoreinrichtung zum Überwachen des seitlichen Umgebungsbereiches in einen ersten Erfassungsbereich und einen zweiten Erfassungsbereich segmentiert beziehungsweise aufgeteilt. Die empfangenen, von dem Objekt zurückgeworfenen Signalkomponenten des Signals werden dem jeweiligen Erfassungsbereich zugeordnet, je nachdem aus welchem Winkel die reflektierte Signalkomponente zurück auf die Sensoreinrichtung trifft.

Dabei wird anhand der aus dem ersten Erfassungsbereich empfangenen Signalkomponente des Signals ein erster Wert eines Abstandes des Objektes zu dem Kraftfahrzeug bestimmt. Es wird ermittelt, ob es sich beim dem Objekt um ein sich seitlich des Kraftfahrzeugs befindliches stationäres Objekt handelt. Es wird anhand der aus dem ersten Erfassungsbereich empfangenen Signalkomponente des Signals eine Radialgeschwindigkeit des Objektes erfasst, und bei einer Übereinstimmung der erfassten Radialgeschwindigkeit mit einem für zumindest einen Winkel innerhalb des ersten Erfassungsbereiches vorbestimmten Erwartungswert für die Radialgeschwindigkeit eines sich seitlich des Kraftfahrzeugs befindlichen stationären Objektes das erfasste Objekt als solches klassifiziert.

Anhand der aus dem zweiten Erfassungsbereich empfangenen Signalkomponente des Signals wird ein zweiter Wert des Abstandes des Objektes zu dem Kraftfahrzeug ermittelt, und anhand des ersten Wertes und des zweiten Wertes des Abstandes bestimmt, ob es sich bei dem als stationäres Objekt bestimmten Objekt um ein in einer Fahrzeuglängsrichtung länglich ausgedehntes, stationäres Objekt handelt.

Die Radialgeschwindigkeit ist die radiale Komponente einer Relativgeschwindigkeit des Objektes und des Kraftfahrzeugs zueinander. Die von der Sensoreinrichtung aus den Signalkomponenten des ersten Erfassungsbereiches ermittelte Radialgeschwindigkeit wird mit dem Erwartungswert, beispielsweise einem hinterlegten Wert, verglichen, der, unter Berücksichtigung der Fahrzeuggeschwindigkeit und des Winkels, aus welchem die Signalkomponente empfangen wurde, gegebenenfalls auch unter Berücksichtigung einer vorbestimmten Toleranz, bei einem stationären Objekt, welches sich in dem ersten Erfassungsbereich befindet, zu erwarten wäre. Bei einer Übereinstimmung wird das erfasste Objekt als Infrastrukturobjekt klassifiziert und qualifiziert.

Insbesondere bei reflektierten Signalen, welche - wie es bei dem insbesondere schräg orientierten ersten und/oder dritten Erfassungsbereich der Fall ist - nicht aus einer senkrecht orientierten Richtung zu der Sensoreinrichtung zurückgeworfen werden, kann eine Longitudinalgeschwindigkeit besonders zuverlässig und genau aus der gemessenen Radialgeschwindigkeit ermittelt werden. Dort ist die Radialgeschwindigkeit des Objektes nämlich wesentlich höher als bei einem - wie es bei dem insbesondere in Fahrzeugquerrichtung orientierten zweiten Erfassungsbereich der Fall ist - senkrecht zur Sensoreinrichtung zurückgeworfenen Signal. In dem zweiten Erfassungsbereich ist die Radialgeschwindigkeit nämlich sehr niedrig beziehungsweise nahezu 0, wodurch eine Bestimmung der Longitudinalgeschwindigkeit aus der gemessenen Radialgeschwindigkeit dort mit einem relativ hohen absoluten Fehler behaftet ist. Daher ist es besonders vorteilhaft, das Objekt anhand des aus dem ersten Erfassungsbereich reflektierten Signals zu klassifizieren.

Der seitliche Umgebungsbereich des Kraftfahrzeugs beziehungsweise der Seitenbereich des Kraftfahrzeugs wird von einer Sensoreinrichtung mit einem sensorspezifischen Überwachungsbereich beziehungsweise einem Gesamterfassungsbereich überwacht. Die Sensoreinrichtung ist bevorzugt als ein Radarsensor ausgestaltet, welcher als das Signal elektromagnetische Wellen in den seitlichen Umgebungsbereich aussendet und die an dem Objekt reflektierten elektromagnetischen Wellen empfängt. Der seitliche Umgebungsbereich wird dabei insbesondere mittels nur einer Sensoreinrichtung beziehungsweise nur eines Radarsensors überwacht.

Der Überwachungsbereich beziehungsweise Gesamterfassungsbereich der Sensoreinrichtung wird dann, beispielsweise mittels einer Auswerteeinrichtung, in die zwei Erfassungsbereiche aufgeteilt beziehungsweise segmentiert. Dazu kann die Auswerteeinrichtung zwei unterschiedlich orientierte Winkelbereiche beziehungsweise Winkelsegmente in dem Gesamterfassungsbereich als die zwei Erfassungsbereiche definieren. Die empfangenen, von dem Objekt zurückgeworfenen Signalkomponenten des Signals werden dabei dem jeweiligen Erfassungsbereich zugeordnet, je nachdem aus welchem Winkel die reflektierte Signalkomponente zurück auf die Sensoreinrichtung trifft. Aus dem Signal können also verschiedene erfassungsbereichspezifische Informationen gewonnen werden, indem die den einzelnen Erfassungsbereichen zugeordneten Signalkomponenten des Signals separat ausgewertet werden. Mittels zumindest einer aus dem ersten Erfassungsbereich empfangenen Signalkomponente des Signals wird das Objekt klassifiziert, nämlich, ob das Objekt stationär ist, also ob es sich bei dem Objekt um ein sogenanntes Infrastrukturobjekt handelt. Es sollen also anhand der Signalkomponenten des Signals aus dem ersten Erfassungsbereich bewegte Objekte, beispielsweise vorbeifahrende Kraftfahrzeuge, von unbewegten beziehungsweise stationären Objekten unterschieden werden. Zusätzlich wird anhand der zumindest einen Signalkomponente des Signals aus dem ersten Erfassungsbereich der erste Wert für den Abstand bestimmt. Insbesondere kann der erste Wert für den Abstand nur beziehungsweise erst dann bestimmt werden, wenn das Objekt als stationäres Objekt klassifiziert wurde.

Mittels zumindest einer aus dem zweiten Erfassungsbereich empfangenen Signalkomponente des Signals wird der zweite Wert für den Abstand beziehungsweise für die Entfernung des Objektes zu dem Kraftfahrzeug ermittelt beziehungsweise bestimmt. Die Erfassungsbereiche werden dabei so segmentiert beziehungsweise aufgeteilt, dass die Signalkomponente in dem jeweiligen Erfassungsbereich die bestmögliche Genauigkeit zum Erhalten der gewünschten Information liefert. Anders ausgedrückt bedeutet dies, dass der erste Erfassungsbereich so gewählt wird, dass dort die Infrastrukturklassifizierung des Objektes besonders zuverlässig möglich ist, und der zweite Erfassungsbereich so gewählt wird, dass dort die Abstandsmessung besonders zuverlässig und genau möglich ist.

Wenn das Objekt anhand der Signalkomponente aus dem ersten Erfassungsbereich als stationär erfasst wurde, kann anhand einer Kombination der Signalkomponenten aus dem ersten und dem zweiten Erfassungsbereich, also anhand des ersten und des zweiten Wertes für den Abstand, das Objekt als das in Fahrzeuglängsrichtung länglich ausgedehnte Objekt klassifiziert werden.

Bei dem länglich ausgedehnten stationären Objekt handelt es sich dabei vorzugsweise um eine in einer Fahrzeughochrichtung, welche senkrecht zur Fahrzeuglängsrichtung orientiert ist, erhabene und/oder sich in Fahrzeuglängsrichtung zumindest über eine Länge des Kraftfahrzeugs erstreckende Fahrbahnbegrenzung einer Fahrbahn des Kraftfahrzeugs. Ein solches Objekt ist insbesondere eine Leitplanke beziehungsweise ein leitplankenähnliches Objekt, welches sich beispielsweise entlang eines Fahrbahnrands beziehungsweise Straßenrandes in dem seitlichen Umgebungsbereich des Kraftfahrzeugs befindet. Insbesondere sollen solche länglich ausgedehnten Infrastrukturobjekte von anderen Infrastrukturobjekten, beispielsweise Straßenschildern, unterschieden werden.

Somit kann durch das Unterteilen des Überwachungsbereiches in die einzelnen Erfassungsbereiche beziehungsweise Sektoren und das geeignete Kombinieren der Messungen aus den einzelnen Sektoren eine sehr zuverlässige Klassifizierung des Objektes in Kombination mit einer sehr genauen Abstandsmessung, insbesondere mittels nur einer Sensoreinrichtung und nur eines Signals, bereitgestellt werden. Das Verfahren, ist somit besonders einfach gestaltet.

Vorzugsweise wird das stationäre Objekt als das in der Fahrzeuglängsrichtung länglich ausgedehnte, stationäre Objekt klassifiziert, wenn eine Differenz zwischen dem ersten Wert und dem zweiten Wert des Abstandes einen vorgegebenen Schwellwert unterschreitet. Insbesondere wird das stationäre Objekt als das länglich ausgedehnte Infrastrukturobjekt klassifiziert, wenn der erste Wert und der zweite Wert für den Abstand im Wesentlich gleich sind beziehungsweise nur geringfügig voneinander abweichen. Somit kann beispielsweise sichergestellt werden, dass die Signalkomponenten aus dem ersten und dem zweiten Erfassungsbereich an demselben Objekt aufgrund dessen länglicher Ausdehnung entlang der Fahrzeuglängsrichtung reflektiert wurden. Das Verfahren ist somit besonders einfach gestaltet.

Besonders bevorzugt wird der Überwachungsbereich der Sensoreinrichtung in den ersten, den zweiten und einen dritten Erfassungsbereich segmentiert und zusätzlich anhand der aus dem dritten Erfassungsbereich empfangenen Signalkomponente des Signals der erste Wert bzw. ein zusätzlicher erster Wert für den Abstand bestimmt. Es wird ermittelt, ob es sich bei dem Objekt um ein stationäres Objekt handelt. Es wird anhand der aus dem dritten Erfassungsbereich empfangenen Signalkomponente des Signals eine Radialgeschwindigkeit des Objektes erfasst, und bei einer Übereinstimmung der erfassten Radialgeschwindigkeit mit einem für zumindest einen Winkel innerhalb des dritten Erfassungsbereiches vorbestimmten Erwartungswert für die Radialgeschwindigkeit eines sich seitlich des Kraftfahrzeugs befindlichen stationären Objektes wird das erfasste Objekt als solches klassifiziert.

Das Ergebnis der Signalauswertung aus dem dritten Erfassungsbereich dient insbesondere zum Überprüfen des Ergebnisses der Signalauswertung aus dem ersten Erfassungsbereich. Somit kann besonders zuverlässig und sicher bestimmt werden, ob es sich bei dem im seitlichen Umgebungsbereich erfassten Objekt tatsächlich um das länglich ausgedehnte, stationäre Objekt, also beispielsweise die Leitplanke, handelt. Dabei wird insbesondere anhand der ersten Werte aus dem ersten und dem dritten Erfassungsbereich und anhand des zweiten Wertes aus dem zweiten Erfassungsbereich das stationäre Objekt als länglich ausgedehnt klassifiziert.

Vorzugsweise wird als der erste Erfassungsbereich ein Teilbereich in dem seitlichen Umgebungsbereich definiert, welcher seitlich des Kraftfahrzeugs in einer schräg nach hinten verlaufenden Richtung orientiert ist, als der zweite Erfassungsbereich ein Teilbereich in dem seitlichen Umgebungsbereich definiert, welcher seitlich des Kraftfahrzeugs in einer zur Fahrzeuglängsrichtung senkrecht orientierten Fahrzeugquerrichtung orientiert ist und als der dritte Erfassungsbereich ein Teilbereich in dem seitlichen Umgebungsbereich definiert, welcher seitlich des Kraftfahrzeugs in einer schräg nach vorne verlaufenden Richtung orientiert ist. Anders ausgedrückt, ist der zweite Erfassungsbereich zwischen dem ersten und dem dritten Erfassungsbereich liegend definiert. Dabei können die Erfassungsbereiche jeweils angrenzend aneinander oder beabstandet zueinander oder bereichsweise überlappend bestimmt werden.

Der Erfindung liegt dabei die Erkenntnis zugrunde, dass die aus den schräg ausgerichteten Erfassungsbereichen, also die aus dem ersten Erfassungsbereich und dem dritten Erfassungsbereich, empfangenen Signalkomponenten des an dem Objekt reflektierten Signals besonders gut zur Klassifizierung des Objektes in Bezug auf dessen longitudinale Geschwindigkeit geeignet sind. In dem zweiten Erfassungsbereich, in welchen das Signal von der Sensoreinrichtung insbesondere senkrecht zu der Fahrzeuglängsrichtung in den seitlichen Umgebungsbereich ausgesendet wird und aus welchem das Signal somit auch senkrecht von dem Objekt zu der Sensoreinrichtung zurückgeworfen wird, kann eine sehr genaue Abstandsmessung durchgeführt werden. Anhand des aus dem zweiten Erfassungsbereich empfangenen Signals kann dabei insbesondere direkt der laterale Abstand, also der Abstand des Kraftfahrzeugs zu dem Objekt in Fahrzeugquerrichtung, ermittelt werden. Bei dem an dem Objekt entlangfahrenden Kraftfahrzeug stellt der laterale Abstand dabei die kürzeste Distanz zwischen Fahrzeuglängsachse und dem Objekt dar.

Bei der insbesondere als Radarsensor ausgestalteten Sensoreinrichtung kann durch die integrierte Winkelerfassung der an dem Objekt reflektierten Signalkomponenten ermittelt werden, aus welcher Richtung die Signalkomponente empfangen wurde, und die Signalkomponente des Signals somit dem entsprechenden Erfassungsbereich zugeordnet werden.

In einer vorteilhaften Ausführungsform deckt der erste Erfassungsbereich einen Winkelbereich zwischen 45 Grad und 80 Grad bezogen auf die Fahrzeuglängsrichtung des Kraftfahrzeugs ab, der zweite Erfassungsbereich einen Winkelbereich zwischen 80 Grad und 100 Grad bezogen auf die Fahrzeuglängsrichtung ab und der dritte Erfassungsbereich einen Winkelbereich zwischen 100 Grad und 135 Grad bezogen auf die Fahrzeuglängsrichtung ab. Der Gesamterfassungsbereich der Sensoreinrichtung erstreckt sich hier also zwischen zumindest 45 Grad und 135 Grad bezogen auf die Fahrzeuglängsrichtung.

Vorzugsweise wird der zweite Wert des Abstandes anhand einer Laufzeit des ausgesendeten und der aus dem zweiten Erfassungsbereich empfangenen Signalkomponente des Signals ermittelt. In diesem zweiten Erfassungsbereich kann eine Abstandsmessung sehr genau durchgeführt werden. Daher werden die Signalkomponenten des Signals aus dem zweiten Erfassungsbereich zur Erfassung des Abstandes beziehungsweise der Distanz des länglich ausgedehnten Strukturobjektes verwendet. Bei dem insbesondere senkrecht zur Fahrzeuglängsrichtung orientierten zweiten Erfassungsbereich kann der Abstand anhand der Laufzeit, also der Zeit zwischen Aussenden und Empfangen des Signals, besonders einfach und genau ermittelt werden, da kein schräger Blickwinkel, in welchem das Signal ausgesendet und wieder empfangen wird, berücksichtigt werden muss. Aus der Laufzeit des Signals in Fahrzeugquerrichtung kann also direkt der laterale Abstand des Kraftfahrzeugs zu dem länglich ausgedehnten Objekt ermittelt werden. Es kann aber auch innerhalb des zweiten Erfassungsbereiches zusätzlich der Winkel berücksichtigt werden, aus welcher die Signalkomponente empfangen wurde. Dies ist insbesondere bei Signalkomponenten des zweiten Erfassungsbereiches relevant, welche leicht schräg, also leicht von der senkrechten Richtung abweichend, empfangen wurden.

Es erweist sich als vorteilhaft, wenn der erste Wert des Abstandes anhand einer Laufzeit des ausgesendeten Signals und der aus dem ersten und/oder einem dritten Erfassungsbereich empfangenen Signalkomponente des Signals und anhand eines Winkels der empfangenen Signalkomponente des Signals zu der Fahrzeugquerrichtung ermittelt wird. Anhand der Laufzeit des ausgesendeten Signals und der aus dem ersten und/oder dritten Erfassungsbereich empfangenen Signalkomponente des Signals kann direkt ein Radialabstand des Kraftfahrzeugs zu dem länglich ausgedehnten Objekt ermittelt werden. Der Radialabstand ist dabei ein Abstand des Kraftfahrzeugs zu dem Objekt in der schräg gerichteten Laufrichtung der Signalkomponente des Signals. Anhand des Winkels, welcher beispielsweise mittels eines an sich bekannten Monopulsverfahrens erfasst wird, kann dieser Radialabstand besonders einfach in den lateralen Abstand umgerechnet werden. Dieser anhand der Signalkomponenten aus dem ersten und/oder dem dritten Erfassungsbereich bestimmte erste Wert des Abstandes dient zum Vergleich mit dem zweiten Wert des anhand der dem zweiten Erfassungsbereich zugeordneten Signalkomponente bestimmten Abstands. Mittels der ersten Werte des Abstandes aus dem ersten und dem dritten Erfassungsbereich kann dabei insbesondere überprüft werden, ob der aus dem zweiten Erfassungsbereich ermittelte zweite Wert des Abstandes tatsächlich den Abstand zu dem länglich ausgedehnten Objekt darstellt oder ob der zweite Wert des Abstandes aus dem zweiten Erfassungsbereich beispielsweise den Abstand zu einem anderen Objekt, beispielsweise einem vorbeifahrenden anderen Fahrzeug, darstellt. Das Verfahren ist somit besonders sicher und zuverlässig geschaltet. Gemäß einer Ausführungsform des Verfahrens wird zumindest ein Messzyklus zum Klassifizieren des Objektes durchgeführt und nach Identifizieren des stationären Objektes für jeden der Erfassungsbereiche der jeweilige Wert des Abstandes bestimmt und gespeichert, das stationäre Objekt anhand des ersten und des zweiten Wertes des Abstandes als in der Fahrzeuglängsrichtung länglich ausgedehnt klassifiziert und anhand eines vorbestimmten Kriteriums ein aktuell gültiger Wert des Abstandes bestimmt. Ein Messzyklus besteht dabei insbesondere aus dem Aussenden des Signals und dem Empfangen des an dem Objekt reflektierten Signals. Dabei kann ein Messzyklus mehrere Detektionen des Objektes aufweisen. Somit können in einem Messzyklus mehrere erste und zweite Werte für den Abstand bestimmt werden. Dabei wird nach jedem Messzyklus, beispielsweise mittels der Laufzeitmessung, der laterale Abstand entweder direkt bestimmt oder aus den gemessenen radialen Abständen berechnet.

Die für den lateralen Abstand bestimmten Werte können beispielsweise in Puffern mit einer bestimmten Größe, beispielsweise jeweils acht Werte, hinterlegt werden, wobei jedem Erfassungsbereich jeweils ein Puffer zugeordnet sein kann und der für den jeweiligen Erfassungsbereich ermittelte Wert in den entsprechenden Puffer geschrieben werden kann. Zusätzlich können Werte aus mehreren Messzyklen oder aus mehreren Detektionen des Objektes eines Messzyklus für den lateralen Abstand innerhalb eines Puffers ihrer Größe nach sortiert werden. Somit können die Werte besonders einfach ausgewertet werden und aus den Werten anhand des vorbestimmten Kriteriums schnell der aktuell gültige Wert pro Messzyklus ausgewählt werden. Wenn die drei Werte in etwa gleich sind, so deutet dies auf die Präsenz eines ausgedehnten Infrastrukturobjektes hin und es wird insbesondere einer der dem zweiten Erfassungsbereich zugeordneten zweiten Werte anhand des vorbestimmten Kriteriums als der aktuell gültige Wert des Abstandes ausgewählt. Als das Kriterium kann beispielsweise die Auswahl des zweitkleinsten zweiten Wertes als der aktuell gültige Wert bestimmt sein. Durch dieses Kriterium kann insbesondere sichergestellt werden, dass eine einmalige Falschdetektion beziehungsweise Falschklassifikation zu keinem Fehler bei der Abstandsbestimmung führt.

Eine Weiterbildung der Erfindung sieht vor, dass der aktuell gültige Wert des Abstandes nach Durchführung eines erneuten Messzyklus nur aktualisiert wird, wenn der aus dem zweiten Erfassungsbereich ermittelte zweite Wert des Abstandes größer als der aus dem ersten und/oder dem dritten Erfassungsbereich ermittelte erste Wert des Abstandes ist und/oder wenn der aus dem zweiten Erfassungsbereich ermittelte zweite Wert des Abstandes höchstens um einen vorbestimmten Schwellwert von dem aktuell gültigen Wert des Abstandes abweicht.

Die Puffer, in welchen die Werte der Abstände gespeichert sind, werden insbesondere zu Beginn eines neuen Messzyklus nicht zurückgesetzt, sondern enthalten noch die Werte aus den vorangegangenen Messzyklen. Dabei kann beispielsweise der jeweils älteste, noch vorhandene Wert pro Puffer überschrieben werden. Wenn das Vorhandensein des Strukturobjektes bereits erkannt wurde, so kann beispielsweise die Auswerteeinrichtung die Werte des Abstandes in den Puffern auswerten. Wenn dabei der in dem zweiten Erfassungsbereich ermittelte zweite Wert des Abstandes insbesondere deutlich größer ist als die in dem ersten und/oder dem dritten Erfassungsbereich ermittelten ersten Werte und insbesondere die ersten Werte in dem ersten und dem dritten Erfassungsbereich in etwa gleich sind, so kann dies auf veraltete Werte in den Puffern hindeuten. Dann wird der aktuell gültige Wert für den Abstand aktualisiert und durch den in dem erneuten Messzyklus ermittelten zweiten Wert des Abstandes des zweiten Erfassungsbereiches ersetzt.

Auch wird der Wert des aktuell gültigen Abstandes aktualisiert, wenn der ermittelte zweite Wert des Abstandes höchstens um einen vorbestimmten Schwellwert, beispielsweise 0,5 Meter, von dem aktuell gültigen Wert des Abstandes abweicht. Weicht der ermittelte zweite Wert des Abstandes um mehr als den vorbestimmten Schwellwert von dem aktuell gültigen Wert des Abstandes ab, so kann der in dem erneuten Messzyklus erfasste zweite Wert des zweiten Erfassungsbereiches darauf hindeuten, dass anhand des aus dem zweiten Erfassungsbereich empfangenen Signals beispielsweise ein anderes, überholendes Fahrzeugs erfasst wurde. Um den Abstand des länglich ausgedehnten Infrastrukturobjektes aber dennoch korrekt anzuzeigen, wird der neu ermittelte zweite Wert des Abstandes, welcher den Abstand zu dem überholenden Fahrzeug kennzeichnet, nicht übernommen, das heißt der aktuell gültige Wert des Abstandes wird nicht aktualisiert.

Eine Ausgestaltung der Erfindung sieht vor, dass für jeden Erfassungsbereich jeweils ein Platzhalterwert beziehungsweise Dummy-Wert für den Abstand vorgegeben wird, wobei die Platzhalterwerte bei einer Initialisierung der Sensoreinrichtung vorgegeben werden und/oder nach einer vorbestimmten Anzahl an Messzyklen vorgegeben werden. Die Platzhalterwerte können beispielsweise zum Initialisieren des Sensors eingesetzt werden und mit einer sehr hohen Distanz beziehungsweise einem sehr hohen Abstand, beispielsweise 32 Meter, angegeben werden. Zusätzlich können in regelmäßigen Abständen, beispielsweise alle vier Messzyklen, die Platzhalterwerte in die Puffer geschrieben werden, um im Fall nicht vorhandener neuer Detektionen ein zu langes Verbleiben alter Messwerte in den Puffern zu vermeiden. Diese Platzhalterwerte können beispielsweise von der Auswerteeinrichtung erkannt werden. Wenn die Auswerteeinrichtung beim Auslesen der Puffer beispielsweise feststellt, dass nur übereinstimmende Platzhalterwerte vorhanden sind, so wird davon ausgegangen, dass kein länglich ausgedehntes Objekt vorhanden ist.

Die Erfindung betrifft auch ein Fahrerassistenzsystem zum Klassifizieren eines Objektes in einem seitlichen Umgebungsbereich eines Kraftfahrzeugs. Das Fahrerassistenzsystem weist eine fahrzeugseitige Sensoreinrichtung zum Überwachen des seitlichen Umgebungsbereiches durch Aussenden eines Signals in den seitlichen Umgebungsbereich und durch Empfangen des an dem Objekt reflektierten Signals auf. Darüber hinaus ist eine Auswerteeinrichtung des Fahrerassistenzsystems dazu ausgelegt, einen Überwachungsbereich der Sensoreinrichtung zum Überwachen des seitlichen Umgebungsbereiches in einen ersten Erfassungsbereich und einen zweiten Erfassungsbereich zu segmentieren. Die Auswerteeinrichtung ist ferner dazu ausgelegt empfangenen, von dem Objekt zurückgeworfenen Signalkomponenten des Signals dem jeweiligen Erfassungsbereich zuzuordnen, je nachdem aus welchem Winkel die reflektierte Signalkomponente zurück auf die Sensoreinrichtung trifft.

Die Auswerteeinrichtung ist ausgelegt anhand der aus dem ersten Erfassungsbereich empfangenen Signalkomponente des Signals einen ersten Wert eines Abstandes des Objektes zu dem Kraftfahrzeug zu bestimmen. Es wird ermittelt, ob es sich beim dem Objekt um ein sich seitlich des Kraftfahrzeugs befindliches stationäres Objekt handelt. Es wird anhand der aus dem ersten Erfassungsbereich empfangenen Signalkomponente des Signals eine Radialgeschwindigkeit des Objektes erfasst, und bei einer Übereinstimmung der erfassten Radialgeschwindigkeit mit einem für zumindest einen Winkel innerhalb des ersten Erfassungsbereiches vorbestimmten Erwartungswert für die Radialgeschwindigkeit eines sich seitlich des Kraftfahrzeugs befindlichen stationären Objektes das erfasste Objekt als solches klassifiziert.

Die Auswerteeinrichtung ist ausgelegt anhand der aus dem zweiten Erfassungsbereich empfangenen Signalkomponente des Signals einen zweiten Wert des Abstandes des Objektes zu dem Kraftfahrzeug zu ermitteln, und anhand des ersten Wertes und des zweiten Wertes des Abstandes zu bestimmen, ob es sich bei dem als stationäres Objekt bestimmten Objekt um ein in einer Fahrzeuglängsrichtung länglich ausgedehntes, stationäres Objekt handelt. Das Fahrerassistenzsystem ist insbesondere als ein Spurwechselassistent oder ein Totwinkelassistent ausgestaltet.

Ein erfindungsgemäßes Kraftfahrzeug umfasst ein erfindungsgemäßes Fahrerassistenzsystem. Das Kraftfahrzeug ist insbesondere als Personenkraftwagen ausgestaltet.

Die mit Bezug auf das erfindungsgemäße Verfahren vorgestellten bevorzugten Ausführungsformen und deren Vorteile gelten entsprechend für das erfindungsgemäße Fahrerassistenzsystem sowie für das erfindungsgemäße Kraftfahrzeug.

Mit Angaben "oben", "unten", "vorne", "hinten", "seitlich", "linksseitig", "rechtsseitig", "schräg nach hinten" (Rₕ), "schräg nach vorne" (Rᵥ), "Fahrzeughochrichtung", "Fahrzeuglängsrichtung" (R_{L}), "Fahrzeugquerrichtung" (R_{Q}) etc. sind bei bestimmungsgemäßer Anordnung der Sensoreinrichtung am Kraftfahrzeug und bei einem dann auf das Kraftfahrzeug blickenden und in Richtung des Kraftfahrzeugs blickenden Beobachter gegebenen Positionen und Orientierungen angegeben.

Im Folgenden wird die Erfindung nun anhand eines bevorzugten Ausführungsbeispiels wie auch unter Bezugnahme auf die beigefügten Zeichnungen näher erläutert.

Dabei zeigen:
- Fig. 1: eine schematische Darstellung einer Ausführungsform eines Kraftfahrzeugs bei einer Klassifizierung eines länglich ausgedehnten stationären Objektes; und
- Fig. 2: einen beispielhaften Zeitverlauf von Abstandsmessungen des Kraftfahrzeugs zu dem länglich ausgedehnten Objekt aus den einzelnen Erfassungsbereichen.

In den Figuren sind gleiche sowie funktionsgleiche Elemente mit den gleichen Bezugszeichen versehen.

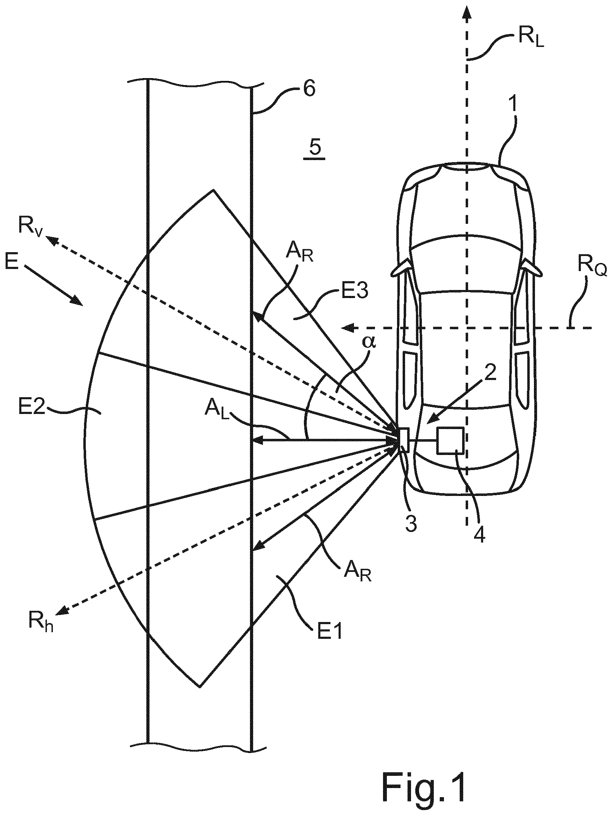

Fig. 1 zeigt ein Kraftfahrzeug 1 mit einem Fahrerassistenzsystem 2. Das Fahrerassistenzsystem 2 ist insbesondere als ein Spurwechselassistent und/oder ein Totwinkelassistent ausgestaltet und weist eine Sensoreinrichtung 3 sowie eine Auswerteeinrichtung 4 auf, welche in die Sensoreinrichtung 3 integriert sein kann. Das Fahrerassistenzsystem 2 ist dazu ausgelegt, Objekte in einem seitlichen Umgebungsbereich 5 des Kraftfahrzeugs 1 zu erfassen und zu klassifizieren. Dabei sollen unter anderem Objekte erkannt, klassifiziert und deren Abstand A_{L} zu dem Kraftfahrzeug 1 bestimmt werden, welche sich im seitlichen Umgebungsbereich 5 des Kraftfahrzeugs 1 befinden, stationär sind und in einer Fahrzeuglängsrichtung R_{L} länglich ausgedehnt sind. Unter einem solchen länglich ausgedehnten stationären Objekt 6 ist vor allem ein Objekt zu verstehen, welches in einer Fahrzeughochrichtung erhaben ist und/oder sich in der Fahrzeuglängsrichtung R_{L} zumindest über eine Länge des Kraftfahrzeugs 1 erstreckt und dabei eine Fahrbahnbegrenzung einer Fahrbahn des Kraftfahrzeugs 1, insbesondere in Form von einer Leitplanke, darstellt.

Zum Erfassen des länglich ausgedehnten stationären Objektes 6, eines sogenannten länglich ausgedehnten Infrastrukturobjektes, sendet die Sensoreinrichtung 3, welche bevorzugt als ein Radarsensor ausgestaltet ist, ein Signal in den seitlichen Umgebungsbereich 5 des Kraftfahrzeugs 1 aus und empfängt das an dem Objekt 6 reflektierte Signal. Die Sensoreinrichtung 3 ist hier an einem Außenverkleidungsteil des Kraftfahrzeugs 1 im hinteren Bereich des Kraftfahrzeugs 1 angeordnet und erfasst hierbei einen linksseitigen (bei Blickrichtung in Richtung der Fahrzeuglängsachse) seitlichen Umgebungsbereich 5 des Kraftfahrzeugs 1. Die Sensoreinrichtung 3 kann auch so angeordnet sein, dass zusätzlich ein Teil des rückwärtigen Bereiches des Kraftfahrzeugs 1 erfasst werden kann. Es kann aber auch zumindest eine weitere, hier nicht dargestellte Sensoreinrichtung 3 zum Erfassen eines beispielsweise rechtsseitigen (bei Blickrichtung in Richtung der Fahrzeuglängsachse) Umgebungsbereiches vorgesehen sein. Die Sensoreinrichtung 3 weist einen Überwachungsbereich E beziehungsweise einen Gesamterfassungsbereich auf, innerhalb welchem sie das Objekt 6 im seitlichen Umgebungsbereich 5 des Kraftfahrzeugs 1 erfassen kann.

Die Auswerteeinrichtung 4 des Fahrerassistenzsystems 2, welche beispielsweise durch ein fahrzeugseitiges Steuergerät ausgebildet sein kann, ist nun dazu ausgelegt, den Überwachungsbereich E der Sensoreinrichtung 3 beispielsweise in einen ersten Erfassungsbereich E1, einen zweiten Erfassungsbereich E2 und einen dritten Erfassungsbereich E3 zu segmentieren beziehungsweise zu unterteilen. Dazu kann die Auswerteeinrichtung 4 Winkelsegmente beziehungsweise Winkelbereiche in dem Gesamterfassungsbereich E als die Erfassungsbereiche E1, E2, E3 definieren. Der Erfassungsbereich E1 ist hier schräg nach hinten in eine Richtung Rₕ gerichtet. Der erste Erfassungsbereich E1 kann dabei beispielsweise einen Winkelbereich zwischen 45 Grad und 80 Grad bezogen auf die Fahrzeuglängsrichtung R_{L} des Kraftfahrzeugs 1 abdecken. Der zweite Erfassungsbereich E2 ist hier in einer senkrecht zur Fahrzeuglängsrichtung R_{L} orientierten Fahrzeugquerrichtung R_{Q} gerichtet. Der zweite Erfassungsbereich E2 kann dabei beispielsweise einen Winkelbereich zwischen 80 Grad und 100 Grad bezogen auf die Fahrzeuglängsrichtung R_{L} abdecken. Der dritte Erfassungsbereich E3 ist hier schräg nach vorne in eine Richtung Rᵥ gerichtet. Der dritte Erfassungsbereich E3 kann beispielsweise einen Winkelbereich zwischen 100 Grad und 135 Grad bezogen auf die Fahrzeuglängsrichtung R_{L} abdecken. Die Erfassungsbereiche E1, E2, E3 sind hier angrenzend aneinander und insbesondere in der in Fig. 1 dargestellten Projektionsebene überlappungsfrei definiert und dargestellt.

Die Erfassungsbereiche E1, E2, E3 können aber auch geringfügig beabstandet zueinander definiert werden und müssen dabei nicht zwangsläufig den Gesamterfassungsbereich E der Sensoreinrichtung 3 abdecken. Dies bedeutet, dass zwischen den Erfassungsbereichen E1, E2, E3 schmale, nicht ausgewertete Winkelsegmente liegen können, wobei die zwischen den Erfassungsbereichen E1, E2, E3 liegenden Winkelsegmente insbesondere einen geringeren Öffnungswinkel aufweisen als die Erfassungsbereiche E1, E2, E3 selbst. Die Erfassungsbereiche E1, E2, E3 können sich aber auch bereichsweise, insbesondere in Randbereichen der Erfassungsbereiche E1, E2, E3, überlappen.

Bei dem länglich ausgedehnten stationären Objekt 6 wird das Signal aus verschiedenen Winkeln zu der Sensoreinrichtung 3 zurückgeworfen beziehungsweise reflektiert. Die Sensoreinrichtung 3 ordnet dabei die Signalkomponente des reflektierten Signals anhand eines Winkels a, aus welchem die Signalkomponente auf die Sensoreinrichtung 3 trifft, den jeweiligen Erfassungsbereichen E1, E2, E3 zu.

Dabei werden in dem ersten Erfassungsbereich E1 und/oder in dem zweiten Erfassungsbereich E3 alle Detektionen berücksichtigt, die potentiell einer Reflexion durch ein Infrastrukturobjekt entsprechen. Anders ausgedrückt, wertet die Auswerteeinrichtung 4 zum Erfassen des Objektes als stationär beziehungsweise unbewegt die Signalkomponenten des Signals aus dem ersten Erfassungsbereich E1 und/oder dem dritten Erfassungsbereich E3 aus. Dazu wird in dem ersten Erfassungsbereich E1 und/oder dem dritten Erfassungsbereich E3 eine Radialgeschwindigkeit des stationären Objektes 6 gemessen und daraus eine Longitudinalgeschwindigkeit ermittelt, da die Radialgeschwindigkeit dort deutlich von null verschieden ist. Das Objekt 6 wird als Infrastrukturobjekt identifiziert, indem die gemessene Radialgeschwindigkeit mit der für den entsprechenden Zielwinkel bei der momentanen Fahrzeuggeschwindigkeit für ein Infrastrukturobjekt erwarteten Radialgeschwindigkeit, also mit einem Erwartungswert für die Radialgeschwindigkeit, verglichen wird. Falls beide Radialgeschwindigkeiten, also die erfasste und die erwartete Radialgeschwindigkeit, insbesondere unter Berücksichtigung des Winkels α und einer vorgegebenen Toleranzschwelle, übereinstimmen, wird die entsprechende Detektion als Infrastrukturobjekt, also als stationäres Objekt, klassifiziert und somit für weitere Auswertungen qualifiziert.

Zusätzlich wird anhand der Signalkomponenten des ersten Erfassungsbereiches E1 und/oder des dritten Erfassungsbereiches E3 jeweils ein erster Wert für den lateralen Abstand A_{L} des Objektes 6 zu dem Kraftfahrzeug 1 bestimmt. Dazu kann zuerst mittels einer Laufzeitmessung ein radialer Abstand A_{R} des Kraftfahrzeugs 1 zu dem stationären Objekt 6 bestimmt werden. Unter Berücksichtigung des Winkels α der Signalkomponente zu der Fahrzeugquerrichtung R_{Q} kann aus dem radialen Abstand A_{R} der laterale Abstand A_{L} berechnet werden.

In dem zweiten Erfassungsbereich E2, in welchem die Radialgeschwindigkeitsmessung nahe bei null liegt und daher keine zuverlässige Infrastrukturklassifikation ermöglicht, kann jedoch ein lateraler Abstand A_{L} zu dem Kraftfahrzeug 1 sehr genau ermittelt werden. Dabei wird ein zweiter Wert für den lateralen Abstand A_{L} aus der Laufzeit des in Fahrzeugquerrichtung R_{Q} ausgesendeten Signals und des an dem länglich ausgedehnten stationären Objekt 6 reflektierten Signals ermittelt beziehungsweise bestimmt. Der laterale Abstand A_{L} stellt dabei, bei dem entlang des länglich ausgedehnten stationären Objektes 6, also der Leitplanke, fahrenden Kraftfahrzeugs 1, den geringsten Abstand des Kraftfahrzeugs 1 zu dem länglich ausgedehnten Objekt 6 dar. Anhand des ersten und des zweiten Wertes für den Abstand A_{L} wird das stationäre Objekt als das entlang der Fahrzeuglängsrichtung R_{L} länglich ausgedehnte stationäre Objekt 6 bestimmt.

Dabei wird das stationäre Objekt insbesondere dann als länglich ausgedehnt bestimmt, wenn der erste Wert des Abstandes A_{L} aus dem ersten und/oder dem dritten Erfassungsbereich E1, E3 und der zweite Wert des Abstandes A_{L} aus dem zweiten Erfassungsbereich E2 im Wesentlich gleich sind, also eine Differenz des ersten und des zweiten Wertes einen vorgegeben Schwellwert unterschreitet.

Insbesondere können zum Klassifizieren des Objektes 6 mehrere Messzyklen durchgeführt werden. Dazu wird pro Messzyklus für jeden Erfassungsbereich E1, E2, E3 der jeweilige Wert des lateralen Abstandes A_{L} bestimmt. Dafür kann bei einer Initialisierung der Sensoreinrichtung 3 für jeden der Erfassungsbereiche E1, E2, E3 jeweils ein Puffer einer vorgegebenen Größe, beispielsweise acht Werte, angelegt werden und mit einem Platzhalterwert beziehungsweise einem Dummy-Wert für den lateralen Abstand A_{L} initialisiert werden. Der Platzhalterwert kann dabei einen sehr hohen Wert für den lateralen Abstand A_{L}, beispielsweise 32 Meter, aufweisen. Pro Messzyklus wird pro Erfassungsbereich E1, E2, E3 für jede qualifizierte Detektion, also bei Klassifizieren des Objektes 6 als Infrastrukturobjekt, der gemessene radiale Abstand A_{R} unter Berücksichtigung des Winkels α in den lateralen Abstand A_{L} umgerechnet und in den zugehörigen Puffer geschrieben.

Die Puffer werden dabei zu Beginn eines neuen Messzyklus nicht zurückgesetzt, sondern enthalten noch die Werte aus den vorangegangenen Messzyklen. Es kann beispielsweise der älteste, noch vorhandene Wert je Puffer ersetzt werden. Nach Abschluss einer Detektionsroutine wird pro Messzyklus eine Auswertung der Werte durchgeführt. Dazu können in jedem Puffer die Werte beispielsweise ihrer Größe nach sortiert werden und ein Wert anhand eines vorbestimmten Kriteriums beziehungsweise ein Wert an einer definierten Position in der Sortierung, beispielsweise der zweitkleinste Wert, ausgegeben und als der aktuell gültige Wert für den Abstand A_{L} festgelegt werden. Durch das Kriterium, also beispielsweise durch die Ausgabe des zweitkleinsten Wertes, kann sichergestellt werden, dass eine einmalige Falschdetektion oder Falschklassifikation zu keinem Fehler bei der Erkennung des Objektes 6, also bei der Leitplankenerkennung, führt. Um im Fall nicht vorhandener neuer Detektionen ein zu langes Verbleiben alter Messwerte in den Puffern zu vermeiden, können in regelmäßigen Abständen, beispielsweise alle vier Messzyklen, die Platzhalterwerte mit dem sehr hohen Abstandswert in die Puffer geschrieben werden.

Somit kann pro Messzyklus für jeden Erfassungsbereich E1, E2, E3 der laterale Abstand A_{L} beziehungsweise die laterale Distanz zum seitlich nächstgelegenen Objekt ermittelt werden. In den ersten und dritten Erfassungsbereichen E1 , E3 kann davon ausgegangen werden, dass aufgrund der präzisen Geschwindigkeitsmessung beziehungsweise Radialgeschwindigkeitsmessung die Klassifikation des Objektes 6 als stationäres Objekt sehr zuverlässig durchgeführt wurde und die in diesen Erfassungsbereichen E1, E3 ermittelte Distanz beziehungsweise der ermittelte erste Wert für den Abstand A_{L} somit das nächstgelegene stationäre Objekt 6 repräsentiert. Dagegen können aufgrund des schrägen Blickwinkels gewisse Einschränkungen bei der Genauigkeit der gemessenen Distanz A_{R} sowie der daraus berechneten lateralen Distanz A_{L} erwartet werden. Andererseits kann nicht sichergestellt werden, dass der aus dem zweiten Erfassungsbereich E2 ermittelte laterale Abstand A_{L} tatsächlich ein stationäres Objekt repräsentiert. Beispielsweise könnte die ermittelte Distanz A_{L} des zweiten Erfassungsbereiches E2 auch zu einem bewegten Objekt, beispielsweise zu einem überholenden Fahrzeug, gehören. Jedoch kann im zweiten Erfassungsbereich E2 davon ausgegangen werden, dass die Distanzmessung sehr präzise ist. Die aus den drei Erfassungsbereichen E1, E2, E3 ermittelten Werte können daher durch die Auswerteeinrichtung 4 geeignet kombiniert beziehungsweise ausgewertet werden, um zu entscheiden, ob ein länglich ausgedehntes stationäres Objekt 6 vorhanden ist, und gegebenenfalls dessen Distanz A_{L} präzise zu bestimmen.

Wenn beispielsweise über eine bestimmte Anzahl an Messzyklen sehr ähnliche Abstandswerte A_{L}, beispielsweise des ersten Erfassungsbereiches E1 und des zweiten Erfassungsbereiches E2, auftreten, so kann die Präsenz des länglich ausgedehnten stationären Objektes 6 angenommen werden. Als der laterale Abstand A_{L} kann dabei der aus dem zweiten Erfassungsbereich E2 gemessene zweite Wert bestimmt werden.

Wenn die Präsenz des länglich ausgedehnten Objektes 6 bereits erkannt wurde und der in dem zweiten Erfassungsbereich E2 ermittelte zweite Wert für den Abstand A_{L} um höchstens einen vorbestimmten Schwellwert, beispielsweise 0,5 Meter, von den aus den vorangegangenen Messzyklen ermittelten Werten für den Abstand A_{L} abweicht, wird der aktuell gültigen Wert des Abstandes A_{L} des Objektes 6 mit dem ermittelten zweiten Wert für den Abstand A_{L} aus dem zweiten Erfassungsbereich E2 aktualisiert. Wenn der aus dem zweiten Erfassungsbereich E2 ermittelte zweite Wert für den Abstand A_{L} jedoch um mehr als der vorgegebene Schwellwert von dem Wert für den Abstand A_{L} aus dem vorangegangenen Messzyklus abweicht, so wird der bisherige aktuell gültige Abstand A_{L} des länglich ausgedehnten Objektes 6 beibehalten. Dieser Fall tritt beispielsweise bei überholenden Kraftfahrzeugen auf, welche das Kraftfahrzeug 1 in einem Zwischenraum zwischen dem Kraftfahrzeug 1 und der Leitplanke 6 überholen.

Wenn die Präsenz des länglich ausgedehnten stationären Objektes 6 bereits erkannt wurde und der im zweiten Erfassungsbereich E2 ermittelte zweite Wert für den Abstand A_{L} insbesondere deutlich größer als die ersten Werte für den Abstand A_{L} des ersten und des dritten Erfassungsbereiches E1, E3 sind und sich diese beiden ersten Werte für den Abstand A_{L} zusätzlich ähnlich sind, wird der aktuell gültige Abstand A_{L} des Objektes 6 mit dem aktuellen zweiten Wert für den Abstand A_{L} des zweiten Erfassungsbereiches E2 aktualisiert. Dieser Fall tritt beispielsweise bei veralteten Werten in den Puffern auf.

Falls es jedoch keine Übereinstimmung der Werte für den Abstand A_{L} von mindestens zwei der drei Erfassungsbereiche E1, E2, E3 gibt oder nur übereinstimmende Platzhaltewerte in den Puffern vorhanden sind, so wird davon ausgegangen, dass kein länglich ausgedehntes Objekt 6 in dem seitlichen Umgebungsbereich 5 vorhanden ist.

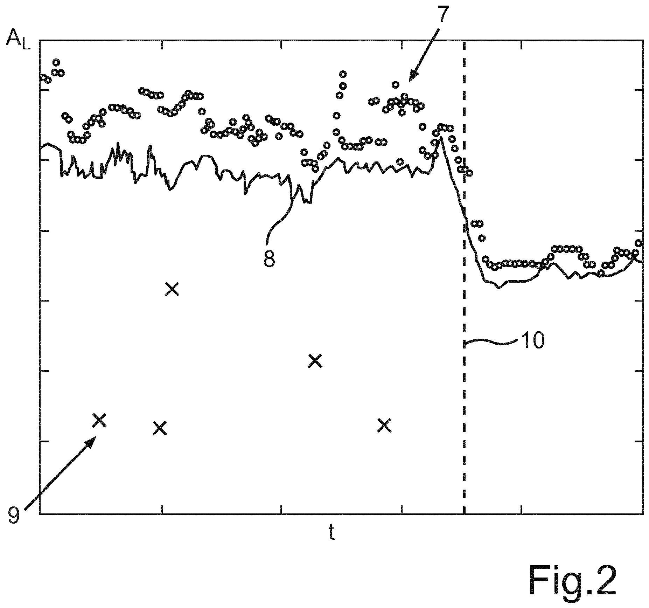

Fig. 2 zeigt beispielhaft eine Messung beziehungsweise Erfassung des Abstandes A_{L} (Ordinate) des Kraftfahrzeugs 1 zu dem Objekt 6 über die Zeit t (Abszisse) in den einzelnen Erfassungsbereichen E1, E2, E3. Die mittels Kreisen dargestellten punktuellen Messwerte 7 sind dabei erste Werte des Abstandes A_{L} aus dem ersten und dem dritten Erfassungsbereich E1, E3. Die durchgehend gezeichnete Linie 8 zeigt dabei das Gesamtergebnis einer Bestimmung des Abstandes A_{L} aus den Werten aller Erfassungsbereiche E1, E2, E3. Der in Fig. 2 beispielhaft dargestellte Zeitverlauf zeigt also, dass zur Abstandsmessung die zweiten Werte aus dem zweiten Erfassungsbereich E2 sehr genaue Ergebnisse liefern. Die Messwerte 9, welche mit einem x gekennzeichnet sind, sind ebenfalls Messwerte des zweiten Erfassungsbereiches E2 und stellen überholende Kraftfahrzeuge dar. An den Stellen der Messwerte 9 wurde also anhand der Messwerte aus dem zweiten Erfassungsbereich E2 nicht der zweite Wert des Abstandes A_{L} zu dem Objekt 6 sondern zu anderen Objekte, beispielsweise den überholenden Kraftfahrzeugen, erfasst. Anhand der aus dem ersten und dem dritten Erfassungsbereich E1, E3 erfassten ersten Werte wird jedoch das Objekt 6 zuverlässig erkannt und somit der aktuell gültige Abstand A_{L} nicht auf den zweiten Wert des zweiten Erfassungsbereiches E2, welcher das überholende Fahrzeug zeigt, gesetzt. Der sich ab der Linie 10 verringernde Abstand A_{L} des Kraftfahrzeugs 1 zu dem Objekt 6 basiert auf einem Spurwechsel des Kraftfahrzeugs 1, durch welchen sich das Kraftfahrzeug 1 dem Objekt 6 nähert.

Somit ist durch die Erfindung ein Verfahren zur Detektion und Klassifikation von ausgedehnten Infrastrukturobjekten 6, insbesondere am Straßenrand, mittels der Sensoreinrichtung 3, insbesondere eines Radarsensors, gezeigt.

## Patentansprüche

1. Verfahren zum Klassifizieren eines Objektes (6) in einem seitlichen Umgebungsbereich (5) eines Kraftfahrzeugs (1), bei welchem von einer fahrzeugseitigen Sensoreinrichtung (3) zum Überwachen des seitlichen Umgebungsbereiches (5) ein Signal in den seitlichen Umgebungsbereich (5) ausgesendet und das an dem Objekt (6) reflektierte Signal empfangen wird, wobei ein Überwachungsbereich (E) der Sensoreinrichtung (3) zum Überwachen des seitlichen Umgebungsbereiches (5) in einen ersten Erfassungsbereich (E1) und einen zweiten Erfassungsbereich (E2) segmentiert wird,
**dadurch gekennzeichnet, dass**
empfangene, von dem Objekt (6) reflektierte Signalkomponenten des Signals dem jeweiligen Erfassungsbereich (E1, E2) zugeordnet werden, je nachdem aus welchem Winkel die reflektierte Signalkomponente des Signals auf die Sensoreinrichtung (3) trifft, wobei anhand der aus dem ersten Erfassungsbereich (E1) empfangenen Signalkomponente des Signals ein erster Wert eines Abstandes (A_{L}) des Objektes (6) zu dem Kraftfahrzeug (1) bestimmt wird, und anhand der aus dem ersten Erfassungsbereich (E1) empfangenen Signalkomponente des Signals eine Radialgeschwindigkeit des Objektes (6) erfasst wird, und bei einer Übereinstimmung der erfassten Radialgeschwindigkeit mit einem für zumindest einen Winkel innerhalb des ersten Erfassungsbereiches (E1) vorbestimmten Erwartungswert für die Radialgeschwindigkeit eines sich seitlich des Kraftfahrzeugs befindlichen stationären Objektes das erfasste Objekt (6) als solches identifiziert wird , und anhand der aus dem zweiten Erfassungsbereich (E2) empfangenen Signalkomponente des Signals ein zweiter Wert des Abstandes (A_{L}) des Objektes (6) zu dem Kraftfahrzeug (1) ermittelt wird, und anhand des ersten Wertes und des zweiten Wertes des Abstandes (A_{L}) bestimmt wird, ob es sich bei dem als stationäres Objekt bestimmten Objekt (6) um ein in einer Fahrzeuglängsrichtung (R_{L}) länglich ausgedehntes, stationäres Objekt handelt.

2. Verfahren nach Anspruch 1,
**dadurch gekennzeichnet, dass**
das stationäre Objekt (6) als das in der Fahrzeuglängsrichtung (R_{L}) länglich ausgedehnte, stationäre Objekt klassifiziert wird, wenn eine Differenz zwischen dem ersten Wert und dem zweiten Wert des Abstandes (A_{L}) einen vorgegebenen Schwellwert unterschreitet.

3. Verfahren nach Anspruch 1 oder 2,
**dadurch gekennzeichnet, dass**
der Überwachungsbereich (E) der Sensoreinrichtung (3) zusätzlich in einen dritten Erfassungsbereich (E3) segmentiert wird und zusätzlich anhand der aus dem dritten Erfassungsbereich (E3) empfangenen Signalkomponente des Signals ein zusätzlicher erste Wert für den Abstand (A_{L}) bestimmt wird, und anhand der aus dem dritten Erfassungsbereich (E3) empfangenen Signalkomponente des Signals eine Radialgeschwindigkeit des Objektes (6) erfasst wird, und bei einer Übereinstimmung der erfassten Radialgeschwindigkeit mit einem für zumindest einen Winkel innerhalb des dritten Erfassungsbereiches (E3) vorbestimmten Erwartungswert für die Radialgeschwindigkeit eines sich seitlich des Kraftfahrzeugs befindlichen stationären Objektes das erfasste Objekt (6) als solches identifiziert wird.

4. Verfahren nach Anspruch 3,
**dadurch gekennzeichnet, dass**
als der erste Erfassungsbereich (E1) ein Teilbereich in dem seitlichen Umgebungsbereich (5) definiert wird, welcher seitlich des Kraftfahrzeugs (1) in einer schräg nach hinten verlaufenden Richtung (Rₕ) orientiert ist, als der zweite Erfassungsbereich (E2) ein Teilbereich in dem seitlichen Umgebungsbereich (5) definiert wird, welcher seitlich des Kraftfahrzeugs (1) in einer zur Fahrzeuglängsrichtung (R_{L}) senkrecht orientierten Fahrzeugquerrichtung (R_{Q}) orientiert ist und als der dritte Erfassungsbereich (E3) ein Teilbereich in dem seitlichen Umgebungsbereich (5) definiert wird, welcher seitlich des Kraftfahrzeugs (1) in einer schräg nach vorne verlaufenden Richtung (Rᵥ) orientiert ist.

5. Verfahren nach Anspruch 3 oder 4,
**dadurch gekennzeichnet, dass**
der erste Erfassungsbereich (E1) einen Winkelbereich zwischen 45 Grad und 80 Grad zu der Fahrzeuglängsrichtung (R_{L}) des Kraftfahrzeugs abdeckt, der zweite Erfassungsbereich (E2) einen Winkelbereich zwischen 80 Grad und 100 Grad zu der Fahrzeuglängsrichtung (R_{L}) abdeckt und der dritte Erfassungsbereich (E3) einen Winkelbereich zwischen 100 Grad und 135 Grad zu der Fahrzeuglängsrichtung (R_{L}) abdeckt.

6. Verfahren nach einem der vorhergehenden Ansprüche,
**dadurch gekennzeichnet, dass**
der zweite Wert des Abstandes (A_{L}) anhand einer Laufzeit des ausgesendeten und der aus dem zweiten Erfassungsbereich (E2) empfangenen Signalkomponente des Signals ermittelt wird.

7. Verfahren nach einem der vorhergehenden Ansprüche,
**dadurch gekennzeichnet, dass**
der erste Wert des Abstandes (A_{L}) anhand einer Laufzeit des ausgesendeten und der aus dem ersten und/oder einem dritten Erfassungsbereich (E1, E3) empfangenen Signalkomponente des Signals und anhand eines Winkels (α) der empfangenen Signalkomponentedes Signals zu der Fahrzeugquerrichtung (R_{Q}) ermittelt wird.

8. Verfahren nach einem der vorhergehenden Ansprüche,
**dadurch gekennzeichnet, dass**
zumindest ein Messzyklus zum Klassifizieren des Objektes (6) durchgeführt wird und nach Identifizieren des stationären Objektes (6) für jeden der Erfassungsbereiche (E1, E2, E3) der jeweilige Wert des Abstandes (A_{L}) bestimmt und gespeichert wird, das stationäre Objekt (6) anhand des ersten und des zweiten Wertes des Abstandes (A_{L}) als in der Fahrzeuglängsrichtung (R_{L}) länglich ausgedehnt klassifiziert wird und anhand eines vorbestimmten Kriteriums ein aktuell gültiger Wert des Abstandes (A_{L}) bestimmt wird.

9. Verfahren nach Anspruch 8,
**dadurch gekennzeichnet, dass**
der aktuell gültige Wert des Abstandes (A_{L}) nach Durchführung eines erneuten Messzyklus nur aktualisiert wird, wenn der aus dem zweiten Erfassungsbereich (E2) ermittelte zweite Wert des Abstandes (A_{L}) größer ist als der aus dem ersten und/oder dem dritten Erfassungsbereich (E1, E3) ermittelte erste Wert des Abstandes (A_{L}) und/oder wenn der aus dem zweiten Erfassungsbereich (E2) ermittelte zweite Wert des Abstandes (A_{L}) höchstens um einen vorbestimmten Schwellwert von dem aktuell gültigen Wert des Abstandes (A_{L}) abweicht.

10. Verfahren nach Anspruch 8 oder 9,
**dadurch gekennzeichnet, dass**
für jeden Erfassungsbereich (E1, E2, E3) jeweils ein Platzhalterwert für den Abstand (A_{L}) vorgegeben wird, wobei die Platzhalterwerte bei einer Initialisierung der Sensoreinrichtung (3) vorgegeben werden und/oder nach einer vorbestimmten Anzahl an Messzyklen vorgegeben werden.

11. Verfahren nach einem der vorhergehenden Ansprüche,
**dadurch gekennzeichnet, dass**
als die Sensoreinrichtung (3) ein Radarsensor bereitgestellt wird.

12. Verfahren nach einem der vorhergehenden Ansprüche,
**dadurch gekennzeichnet, dass**
als das ausgedehnte stationäre Objekt (6) eine in einer Fahrzeughochrichtung erhabene und/oder sich in Fahrzeuglängsrichtung (R_{L}) zumindest über eine Länge des Kraftfahrzeugs (1) erstreckende Fahrbahnbegrenzung einer Fahrbahn des Kraftfahrzeugs (1), insbesondere eine Leitplanke, erfasst wird.

13. Fahrerassistenzsystem (2) zum Klassifizieren eines Objektes (6) in einem seitlichen Umgebungsbereich (5) eines Kraftfahrzeugs (1) mit einer fahrzeugseitigen Sensoreinrichtung (3) zum Überwachen des seitlichen Umgebungsbereiches (5) durch Aussenden eines Signals in den seitlichen Umgebungsbereich (5) und durch Empfangen des an dem Objekt (6) reflektierten Signals,
wobei eine Auswerteeinrichtung (4) des Fahrerassistenzsystems (2) dazu ausgelegt ist, einen Überwachungsbereich (E) der Sensoreinrichtung (3) zum Überwachen des seitlichen Umgebungsbereiches (5) in einen ersten Erfassungsbereich (E1) und einen zweiten Erfassungsbereich (E2) zu segmentieren
**dadurch gekennzeichnet, dass**
die Auswerteeinrichtung (4) ferner dazu ausgelegt ist empfangene, von dem Objekt (6) reflektierte Signalkomponenten des Signals dem jeweiligen Erfassungsbereich (E1, E2) zuzuordnen, je nachdem aus welchem Winkel die reflektierte Signalkomponente des Signals auf die Sensoreinrichtung (3) trifft, und anhand der aus dem ersten Erfassungsbereich (E1) empfangenen Signalkomponente des Signals einen ersten Wert eines Abstandes (A_{L}) des Objektes (6) zu dem Kraftfahrzeug (1) zu bestimmen, und anhand der aus dem ersten Erfassungsbereich (E1) empfangenen Signalkomponente des Signals eine Radialgeschwindigkeit des Objektes (6) zu erfassen, und bei einer Übereinstimmung der erfassten Radialgeschwindigkeit mit einem für zumindest einen Winkel innerhalb des ersten Erfassungsbereiches (E1) vorbestimmten Erwartungswert für die Radialgeschwindigkeit eines sich seitlich des Kraftfahrzeugs befindlichen stationären Objektes das erfasste Objekt (6) als solches zu identifizieren, und anhand der aus dem zweiten Erfassungsbereich (E2) empfangenen Signalkomponente des Signals einen zweiten Wert des Abstandes (A_{L}) des Objektes (6) zu dem Kraftfahrzeug (1) zu ermitteln, und anhand des ersten Wertes und des zweiten Wertes des Abstandes (A_{L}) zu bestimmen, ob es sich bei dem als stationäres Objekt bestimmten Objekt (6) um ein in einer Fahrzeuglängsrichtung (R_{L}) länglich ausgedehntes, stationäres Objekt handelt.

14. Kraftfahrzeug (1) mit einem Fahrerassistenzsystem (2) nach Anspruch 13.

## Claims

1. Method for classifying an object (6) in a lateral surrounding area (5) of a motor vehicle (1), in which a signal is transmitted into the lateral surrounding area (5) by a sensor device (3) on-board the vehicle for monitoring the lateral surrounding area (5) and the signal reflected at the object (6) is received by said sensor device (3),
wherein a monitoring area (E) of the sensor device (3) for monitoring the lateral surrounding area (5) is segmented into a first detection area (E1) and a second detection area (E2),
**characterized in that**
received signal components of the signal reflected by the object (6) are allocated to the respective detection area (E1, E2), depending on the angle from which the reflected signal component of the signal arrives at the sensor device (3), wherein a first value for a distance (A_{L}) from the object (6) to the motor vehicle (1) is defined on the basis of the signal component of the signal received from the first detection area (E1), and a radial speed of the object (6) is detected on the basis of the signal component of the signal received from the first detection area (E1) and, if the detected radial speed corresponds to an expected value for the radial speed of a stationary object located laterally in relation to the motor vehicle, said expected value being predefined for at least one angle within the first detection area (E1), the detected object (6) is identified as such, and a second value for the distance (A_{L}) from the object (6) to the motor vehicle (1) is determined on the basis of the signal component of the signal received from the second detection area (E2), and it is defined on the basis of the first value and the second value for the distance (A_{L}) whether the object (6) defined as a stationary object is a stationary object longitudinally extended in a longitudinal direction (R_{L}) of the vehicle.

2. Method according to Claim 1,
**characterized in that**
the stationary object (6) is classified as the stationary object longitudinally extended in the longitudinal direction (R_{L}) of the vehicle if a difference between the first value and the second value for the distance (A_{L}) falls below a specified threshold value.

3. Method according to Claim 1 or 2,
**characterized in that**
the monitoring area (E) of the sensor device (3) is additionally segmented into a third detection area (E3) and an additional first value for the distance (A_{L}) is defined on the basis of the signal component of the signal received from the third detection area (E3), and a radial speed of the object (6) is detected on the basis of the signal component of the signal received from the third detection area (E3) and, if the detected radial speed corresponds to an expected value for the radial speed of a stationary object located laterally in relation to the motor vehicle, said expected value being predefined for at least one angle within the third detection area (E3), the detected object (6) is identified as such.

4. Method according to Claim 3,
**characterized in that**
a partial area in the lateral surrounding area (5) which is oriented laterally in relation to the motor vehicle (1) in a direction (Rₕ) running obliquely backwards is defined as the first detection area (E1), a partial area in the lateral surrounding area (5) which is oriented laterally in relation to the motor vehicle (1) in a transverse direction (R_{Q}) of the vehicle oriented vertically in relation to the longitudinal direction (R_{L}) of the vehicle is defined as the second detection area (E2), and a partial area in the lateral surrounding area (5) which is oriented laterally in relation to the motor vehicle (1) in a direction (Rᵥ) running obliquely forwards is defined as the third detection area (E3).

5. Method according to Claim 3 or 4,
**characterized in that**
the first detection area (E1) covers an angle range between 45 degrees and 80 degrees in relation to the longitudinal direction (R_{L}) of the motor vehicle, the second detection area (E2) covers an angle range between 80 degrees and 100 degrees in relation to the longitudinal direction (R_{L}) of the vehicle and the third detection area (E3) covers an angle range between 100 degrees and 135 degrees in relation to the longitudinal direction (R_{L}) of the vehicle.

6. Method according to one of the preceding claims,
**characterized in that**
the second value for the distance (A_{L}) is determined on the basis of a transit time of the transmitted signal and the signal component of the signal received from the second detection area (E2).

7. Method according to one of the preceding claims,
**characterized in that**
the first value for the distance (A_{L}) is determined on the basis of a transit time of the transmitted signal and the signal component of the signal received from the first and/or a third detection area (E1, E3) and on the basis of an angle (α) of the received signal component of the signal in relation to the transverse direction (R_{Q}) of the vehicle.

8. Method according to one of the preceding claims,
**characterized in that**
at least one measuring cycle is performed to classify the object (6) and, following the identification of the stationary object (6), the respective value for the distance (A_{L}) is defined and stored for each of the detection areas (E1, E2, E3), the stationary object (6) is classified as longitudinally extended in the longitudinal direction (R_{L}) of the vehicle on the basis of the first and the second value for the distance (A_{L}), and a currently valid value for the distance (A_{L}) is defined on the basis of a predefined criterion.

9. Method according to Claim 8,
**characterized in that**
the currently valid value for the distance (A_{L}) is updated following the performance of a further measuring cycle only if the second value for the distance (A_{L}) determined from the second detection area (E2) is greater than the first value for the distance (A_{L}) determined from the first and/or the third detection area (E1, E3) and/or if the second value for the distance (A_{L}) determined from the second detection area (E2) deviates from the currently valid value for the distance (A_{L}) at most by a predefined threshold value.

10. Method according to Claim 8 or 9,
**characterized in that**
a wildcard value for the distance (A_{L}) is specified in each case for each detection area (E1, E2, E3), wherein the wildcard values are specified during an initialization of the sensor device (3) and/or are specified after a predefined number of measuring cycles.

11. Method according to one of the preceding claims,
**characterized in that**
a radar sensor is provided as the sensor device (3).

12. Method according to one of the preceding claims,
**characterized in that**
a carriageway boundary of a carriageway on which the motor vehicle (1) is travelling, in particular a crash barrier, elevated in a vertical direction of the vehicle and/or extending in a longitudinal direction (R_{L}) of the vehicle at least over a length of the motor vehicle (1) is detected as the extended stationary object (6).

13. Driver assistance system (2) for classifying an object (6) in a lateral surrounding area (5) of a motor vehicle (1), with a sensor device (3) on-board the vehicle for monitoring the lateral surrounding area (5) by transmitting a signal into the lateral surrounding area (5) and by receiving the signal reflected at the object (6),
wherein an evaluation device (4) of the driver assistance system (2) is designed to segment a monitoring area (E) of the sensor device (3) for monitoring the lateral surrounding area (5) into a first detection area (E1) and a second detection area (E2),
**characterized in that**
the evaluation device (4) is also designed to allocate signal components of the signal reflected by the object (6) to the respective detection area (E1, E2), depending on the angle from which the reflected signal component of the signal arrives at the sensor device (3), and to define a first value for a distance (A_{L}) from the object (6) to the motor vehicle (1) on the basis of the signal component of the signal received from the first detection area (E1), and to detect a radial speed of the object (6) on the basis of the signal component of the signal received from the first detection area (E1) and, if the detected radial speed corresponds to an expected value for the radial speed of a stationary object located laterally in relation to the motor vehicle, said expected value being predefined for at least one angle within the first detection area (E1), to identify the detected object (6) as such, and to determine a second value for the distance (A_{L}) from the object (6) to the motor vehicle (1) on the basis of the signal component of the signal received from the second detection area (E2) and, on the basis of the first value and the second value for the distance (A_{L}), to define whether the object (6) defined as a stationary object is a stationary object longitudinally extended in a longitudinal direction (R_{L}) of the vehicle.

14. Motor vehicle (1) with a driver assistance system (2) according to Claim 13.

## Revendications

1. Procédé permettant de classifier un objet (6) dans une zone d'environnement latérale (5) d'un véhicule automobile (1), selon lequel, pour la surveillance de la zone d'environnement latérale (5), un dispositif capteur (3) côté véhicule émet un signal dans la zone d'environnement latérale (5) et reçoit le signal réfléchi sur l'objet (6), une zone de surveillance (E) du dispositif capteur (3) pour la surveillance de la zone d'environnement latérale (5) étant segmentée en une première zone de détection (E1) et une deuxième zone de détection (E2),
**caractérisé en ce que** des composantes de signal reçues du signal, réfléchies par l'objet (6), sont associées à la zone de détection (E1, E2) respective en fonction de l'angle selon lequel la composante de signal réfléchie du signal est incidente sur le dispositif capteur (3), dans lequel, une première valeur d'une distance (A_{L}) entre l'objet (6) et le véhicule automobile (1) est déterminée à l'aide de la composante de signal du signal, reçue à partir de la première zone de détection (E1), et à une vitesse radiale de l'objet (6) est détectée l'aide de la composante de signal du signal, reçue à partir de la première zone de détection (E1), et en cas de concordance entre la vitesse radiale détectée avec une valeur attendue, prédéterminée pour au moins un angle à l'intérieur de la première zone de détection (E1), pour la vitesse radiale d'un objet stationnaire se trouvant latéralement par rapport au véhicule automobile, l'objet détecté (6) est identifié comme tel, et à l'aide de la composante de signal du signal, reçue à partir de la deuxième zone de détection (E2), une deuxième valeur de la distance (A_{L}) entre l'objet (6) et le véhicule automobile (1) est établie, et à l'aide de la première valeur et de la deuxième valeur de la distance (A_{L}), il est déterminé si l'objet (6) déterminé en tant qu'objet stationnaire est un objet stationnaire allongé de manière oblongue dans une direction longitudinale de véhicule (R_{L}) .

2. Procédé selon la revendication 1, **caractérisé en ce que** l'objet stationnaire (6) est classifié comme l'objet stationnaire allongé de manière oblongue dans la direction longitudinale de véhicule (R_{L}) si une différence entre la première valeur et la deuxième de la distance (A_{L}) soupasse une valeur seuil prédéfinie.

3. Procédé selon la revendication 1 ou 2, **caractérisé en ce que** la zone de surveillance (E) du dispositif capteur (3) est en outre segmentée en une troisième zone de détection (E3), et en outre une première valeur supplémentaire pour la distance (A_{L}) est déterminée à l'aide de la composante de signal du signal, reçue à partir de la troisième zone de détection (E3), et une vitesse radiale de l'objet (6) est détectée à l'aide de la composante de signal du signal, reçue à partir de la troisième zone de détection (E3), et en cas de concordance de la vitesse radiale détectée avec une valeur attendue, prédéterminée pour au moins un angle à l'intérieur de la troisième zone de détection (E3), pour la vitesse radiale d'un objet stationnaire se trouvant latéralement par rapport au véhicule automobile, l'objet (6) détecté est identifié comme tel.

4. Procédé selon la revendication 3, **caractérisé en ce que** comme la première zone de détection (E1), une zone partielle dans la zone d'environnement latérale (5) est définie qui est orientée latéralement par rapport au véhicule automobile (1) dans une direction (Rₕ) s'étendant en oblique vers l'arrière, comme la deuxième zone de détection (E2), une zone partielle dans la zone d'environnement latérale (5) est définie qui est orientée latéralement par rapport au véhicule automobile (1) dans une direction transversale de véhicule (R_{Q}) orientée perpendiculairement à la direction longitudinale de véhicule (R_{L}), et comme la troisième zone de détection (E3), une zone partielle dans la zone d'environnement latérale (5) est définie qui est orientée latéralement par rapport au véhicule automobile (1) dans une direction (Rᵥ) s'étendant en oblique vers l'avant.

5. Procédé selon la revendication 3 ou 4, **caractérisé en ce que** la première zone de détection (E1) couvre une plage angulaire comprise entre 45 degrés et 80 degrés par rapport à la direction longitudinale de véhicule (R_{L}) du véhicule automobile, la deuxième zone de détection (E2) couvre une plage angulaire comprise entre 80 degrés et 100 degrés par rapport à la direction longitudinale de véhicule (R_{L}), et la troisième zone de détection (E3) couvre une plage angulaire comprise entre 100 degrés et 135 degrés par rapport à la direction longitudinale de véhicule (R_{L}).

6. Procédé selon l'une quelconque des revendications précédentes, **caractérisé en ce que** la deuxième valeur de la distance (A_{L}) est établie à l'aide d'un temps de propagation du signal émis et de la composante de signal du signal, reçue à partir de la deuxième zone de détection (E2).

7. Procédé selon l'une quelconque des revendications précédentes, **caractérisé en ce que** la première valeur de la distance (A_{L}) est établie à l'aide d'un temps de propagation du signal émis et de la composante de signal du signal, reçue à partir de la première et/ou d'une troisième zone de détection (E1, E3), et à l'aide d'un angle (α) de la composante de signal reçue du signal par rapport à la direction transversale de véhicule (R_{Q}) .

8. Procédé selon l'une quelconque des revendications précédentes, **caractérisé en ce qu'**au moins un cycle de mesure est effectué pour classifier l'objet (6), et après l'identification de l'objet stationnaire (6) pour chacune des zones de détection (E1, E2, E3), la valeur respective de la distance (A_{L}) est déterminée et stockée, l'objet stationnaire (6) est classifié à l'aide de la première et de la deuxième valeur de la distance (A_{L}) comme étant allongé de manière oblongue dans la direction longitudinale de véhicule (R_{L}), et une valeur actuellement valable de la distance (A_{L}) est déterminée à l'aide d'un critère prédéterminé.

9. Procédé selon la revendication 8, **caractérisé en ce que** la valeur actuellement valable de la distance (A_{L}) n'est mise à jour après exécution d'un cycle de mesure renouvelé que si la deuxième valeur de la distance (A_{L}), établie à partir de la deuxième zone de détection (E2), est supérieure à la première valeur de la distance (A_{L}), établie à partir de la première et/ou de la troisième zone de détection (E1, E3), et/ou si la deuxième valeur de la distance (A_{L}), établie à partir de la deuxième zone de détection (E2), s'écarte au maximum d'une valeur seuil prédéterminée de la valeur actuellement valable de la distance (A_{L}).

10. Procédé selon la revendication 8 ou 9, **caractérisé en ce que** pour chaque zone de détection (E1, E2, E3), respectivement une valeur par défaut est prédéfinie pour la distance (A_{L}), les valeurs par défaut étant prédéfinies lors d'une initialisation du dispositif capteur (3) et/ou étant prédéfinies après un nombre prédéterminé de cycles de mesure.

11. Procédé selon l'une quelconque des revendications précédentes, **caractérisé en ce qu'**un capteur radar est fourni comme le dispositif capteur (3).

12. Procédé selon l'une quelconque des revendications précédentes, **caractérisé en ce que** comme l'objet stationnaire allongé de manière oblongue (6), une délimitation de chaussée d'une chaussée du véhicule automobile (1), redressée dans une direction verticale de véhicule et/ou s'étendant dans la direction longitudinale de véhicule (R_{L}) au moins sur une longueur du véhicule automobile (1), en particulier une glissière de sécurité, est détectée.

13. Système d'assistance au conducteur (2) permettant de classifier un objet (6) dans une zone d'environnement latérale (5) d'un véhicule automobile (1), comprenant un dispositif capteur (3) côté véhicule pour surveiller la zone d'environnement latérale (5) par l'émission d'un signal dans la zone d'environnement latérale (5) et par la réception du signal réfléchi sur l'objet (6),
un dispositif d'évaluation (4) du système d'assistance au conducteur (2) étant conçu pour segmenter une zone de surveillance (E) du dispositif capteur (3) pour surveiller la zone d'environnement latérale (5) en une première zone de détection (E1) et une deuxième zone de détection (E2),
**caractérisé en ce que** le dispositif d'évaluation (4) est en outre conçu pour associer des composantes de signal reçues du signal, réfléchies par l'objet (6), à la zone de détection (E1, E2) respective en fonction de l'angle selon lequel la composante de signal réfléchie du signal est incidente le dispositif capteur (3), et pour déterminer à l'aide de la composante de signal du signal, reçue à partir de la première zone de détection (E1), une première valeur d'une distance (A_{L}) entre l'objet (6) et le véhicule automobile (1), et pour détecter à l'aide de la composante de signal du signal, reçue à partir de la première zone de détection (E1), une vitesse radiale de l'objet (6), et en cas de concordance de la vitesse radiale détectée avec une valeur attendue, prédéterminée pour au moins un angle à l'intérieur de la première zone de détection (E1), pour la vitesse radiale d'un objet stationnaire se trouvant latéralement par rapport au véhicule automobile pour identifier l'objet détecté (6) en tant que tel, et pour établir à l'aide de la composante de signal du signal, reçue à partir de la deuxième zone de détection (E2), une deuxième valeur de la distance (A_{L}) entre l'objet (6) et le véhicule automobile (1), et pour déterminer à l'aide de la première valeur et de la deuxième valeur de la distance (A_{L}) si l'objet (6) déterminé comme l'objet stationnaire est un objet stationnaire allongé de manière oblongue dans une direction longitudinale de véhicule (R_{L}) .

14. Véhicule automobile (1) comprenant un système d'assistance au conducteur (2) selon la revendication 13.
